# EUROPEAN PATENT SPECIFICATION

(11) **EP 3 149 074 B1**
(45) Date of publication and mention of the grant of the patent: **14.03.2018**
(21) Application number: 15724649.7
(22) Date of filing: 26.05.2015
(51) Int. Cl.: C08J 9/12, C08J 9/20, C08F 212/08

(54) **WATER EXPANDABLE POLYMER BEADS**
WASSEREXPANDIERBARE POLYMERKÜGELCHEN
BILLES DE POLYMÈRE EXPANSIBLES À L'AIDE D'EAU

(30) Priority: 28.05.2014 EP 14170311
(43) Date of publication of application: 05.04.2017
(73) Proprietor: SABIC Global Technologies B.V., 4612 PX Bergen op Zoom (NL)
(72) Inventor: GHURMALLAH, Ghamdi, Riyadh 11422 (SA); SCIARONE, Timotheus, Johannes, Jacobus, NL-5600 HG Eindhoven (NL); NELISSEN, Laurentius,Nicolaas, Ida, Hubertus, NL-5600 HG Eindhoven (NL)
(74) Representative: Sabic Intellectual Property Group
(86) International application number: PCT/EP2015/061503
(87) International publication number: WO 2015/181113

(56) References cited:
- WO-A1-2013/034276

## Description

The present invention relates to a process for the preparation of water expandable polymer, in particular water expandable polystyrene (WEPS) beads. The present invention further relates to such WEPS and expanded polymer beads obtained by expanding such WEPS.

Commercially available expandable polystyrene beads (EPS) generally use pentane isomers as the blowing agent. The application of pentane and its isomers results in homogeneous EPS foams of low density. However, one main disadvantage of using pentane or its isomers is the harmfulness to the environment. Research showed that both pentane and its isomers contribute to ozone formation in the lower atmosphere. Also carbon dioxide, which contributes to the greenhouse effect, is being formed during the photo-oxidation of pentane.

A dissertation of the University of Eindhoven "Water Expandable Polystyrene" by J. J. Crevecoeur dating from 1997 describes a process for the production of WEPS, in which water, finely distributed in styrene, is first of all emulsified by means of surface-active substances, after which the styrene is polymerized up to a conversion of 50%, the mixture is suspended in water with phase inversion and the styrene is finally polymerized to completion by means of peroxide initiators. The surface-active substances used are amphiphilic emulsifiers, eg sodium bis(2-ethylhexyl)sulfosuccinate (AOT) or block copolymers of sodium styrenesulfonate (SSS) and styrene which were prepared in-situ using a phase transfer catalyst as described in US6242540. All of these substances exhibit both a hydrophilic and a hydrophobic moiety and are thus capable of emulsifying water in styrene.

US6160027 describes the preparation of beads consisting of polystyrene homopolymer. An additional emulsifier (preferably sodium bis(2-ethylhexyl)sulfosuccinate: AOT) is used in the prepolymerization step to emulsify the water droplets in the polystyrene/styrene prepolymer mixture. The problem of using emulsifiers with long linear alkyl chains is that the miscibility of these aliphatic emulsifier tails with the aromatic styrene/polystyrene phase decreases with increasing conversion of the styrene/polystyrene mixture. At a certain degree of conversion showing a certain high viscosity, destabilization of the inverse emulsion can take place which results in coalescence of dispersed water droplets.

Polymer, 2006, 47, 6303-6310 and WO2007/030719 describe a method similar to the method developed by Crevecoeur et al. to prepare WEPS beads. However, sodium montmorillonite nanoclay (Na⁺MMT) was added to the emulsified water as a water absorber/carrier. For these reactions, an emulsifier sodium bis(2-ethylhexyl) sulfosuccinate (AOT) was used as emulsifier. An improved water uptake and reduced water loss during storage due to the presence of montmorillonite nanoclay is described. WEPS foams with a density of less than 50 kg/m³ were obtained. According to these publications, the montmorillonite nanoclay forms a layer around the cell wall during foaming of the WEPS beads. This layer reduces free diffusion of water out of the bead during the foaming procedure so that more water is available for expansion and hence larger expansion ratios are obtained. Furthermore, it was found that the presence of nanoclay reduces the loss of water during storage.

WO2013/029757 discloses the use of a combination of nanoclay and polar comonomers as water absorber/carrier in an emulsifier-free process. The presence of this combination results in stable suspensions and final beads showing a high water uptake and a homogeneous distribution of the nanoclay/water dispersion in the polymer matrix. For some polar comonomers however, the incorporation of the polar comonomer can result in a distribution of *T*_{g} values in the final copolymer. This effect can lead to a less homogeneous foaming process.

WO2013/034276 discloses a process for the emulsifier-free preparation of water expandable polymer beads. In this process, an emulsifier-free starting composition comprising styrene and a polyphenylene ether (PPE) resin is prepolymerized and an aqueous dispersion of a modifier-free nanoclay was added to the prepolymer composition to obtain an inverse emulsion. After suspending droplets of the inverse emulsion in an aqueous medium, the monomers in the droplets are polymerized. A very stable suspension polymerization system was obtained which results in polymer beads having a good expandability. In this process, to prevent interference with the polymerization of styrene, the PPE needs to be end-capped, since the phenolic OH groups act as radical scavengers and thus prevent styrene polymerization. Further, the disadvantage of adding PPE is that the final foamed articles consist of a PS/PPE blend, which cannot be recycled as easily as PS- foam.

There is a need in the industry for a novel process for the preparation of water expandable polymer beads.

It is an object of the present invention to provide a novel process for the preparation of water expandable polymer beads in which the above and/or other problems are reduced. Specifically it is an object of the present invention to provide a novel process for the preparation of water expandable polystyrene (WEPS) beads in which the above and/or other problems are reduced.

According to the present invention, there is provided a process for the preparation of water expandable polymer, in particular polystyrene, beads, which process comprises the steps of:
a) providing a starting composition comprising styrene and a cross-linking agent containing a hydrophilic polymer chain and at least two hydrolysable end-groups having a carbon-to-carbon double bond,
b) prepolymerizing the starting composition to obtain a prepolymer composition,
c) adding an aqueous dispersion of a modifier-free nanoclay to the prepolymer composition to obtain an inverse emulsion,
d) suspending the inverse emulsion obtained by step c) in an aqueous medium to yield an aqueous suspension of suspended droplets and
e) polymerizing the monomers in the droplets of the suspension obtained by step d) to obtain the water expandable polymer beads.

According to the invention, it was surprisingly found that the use of the specific cross-linking agent used in the invention ensures a good distribution of water droplets in the WEPS beads resulting in good expandability, without the use of PPE. Good mechanical properties of the WEPS beads are also obtained. The absence of expensive PPE makes the production of the WEPS more cost-efficient. Further, the WEPS obtained according to the invention is suitable for recycling, since the WEPS beads no longer consist of a PPE/PS blend, but may consist almost completely of polystyrene. Accordingly, the starting composition is preferably substantially free from a PPE resin.

According to the invention, it was found that the presence of the hydrophilic polymer chain in the crosslinking agent is essential. Crosslinking agents without the hydrophilic polymer chain such as ethylene glycol dimethacrylate result in relatively large water droplets in the WEPS beads, resulting in poor expandability. Hydrolysable end-groups are necessary for the crosslinking functionalities. Compounds with hydrophilic polymer chain but without the hydrolysable end-groups do not have crosslinking functionalities and were found to result in poor expansion.

It is a further advantage of the present invention that the WEPS beads obtained according to the invention are recyclable in spite of the fact that they are crosslinked. While cross-linking with conventional cross-linking agents (e.g. divinylbenzene) generally precludes recycling of polystyrene materials, the present invention utilizes a cross-linking agent which results in hydrolysable cross-links, rendering the cross-links non-problematic with regard to recycling.

The cross-linking agent preferably has a molecular weight Mn of at least 300 g/mol, more preferably at least 500 g/mol, more preferably at least 700 g/mol. The molecular weight Mn of the cross-linking agent may e.g. be at most 3000 g/mol, at most 2000 g/mol or at most 1000 g/mol.

The hydrophilic polymer chain of the cross-linking agent can, for example, be chosen from the group consisting of polyethers such as polyalkylene glycol, poly(meth)acrylates such as homo and copolymers of acrylic and methacrylic acid, polyamides, polyacrylamides such as polyvinylamides, polyesters, poly (lactams) such as polyvinylpyrrolidone (PVP), polyurethanes, polyvinyl chlorides, polyvinylethers, polyepoxides, polyoxazolidones, polyvinyl alcohols, polyethylene imines, polyethyleneoxides, maleic anhydride based copolymers, polypeptides, polysaccharides such as cellulose and starch, poly(carboxylic acids), polyanhydrides, polyols, polyphosphazenes and alkyd copolymers. Especially preferred are polyalkylene glycol, in particular polyethylene glycol.

The end groups may be represented by general formula -X-CR¹=CR²R³, wherein
X is selected from ether group, carboxyl group and amide group;
R¹, R² and R³ each independently stands for H or an alkyl having 1 to 3 C-atoms.

The end groups are preferably acrylate or methacrylate.

Most preferably, the cross-linking agent is polyethylene glycol diacrylate or polyethylene glycol dimethacrylate.

In particularly preferred embodiments, the cross-linking agent is polyethylene glycol diacrylate or polyethylene glycol dimethacrylate having an Mn of at least 300 g/mol.

The process according to the present invention is preferably an emulsifier-free process. The addition of an emulsifier leads to undesirable situations such as a complete inverse emulsion.

Known emulsifiers used for the preparation of water-expandable polymer beads in the prior art are sorbitan carboxylates, sorbitol or mannitol carboxylates, glycol or glycerol carboxylates, alkanolamides, alkyl phenols and dialkyl ethers (any of these emulsifiers may or may not contain a polyalkoxy chain with 1 to 20 oxyalkylene groups). Other known emulsifiers used for the preparation of water-expandable polymer beads are salts of long chain (C8-30) carboxylic acids, long chain (C8-30) alkyl sulphonic acids. Other known emulsifiers used for the preparation of water-expandable polymer beads are alkylarylsulphonic acid and sulphosuccinic acid. Furthermore, high-molecular-weight fatty amines, ammonium or other nitrogen derivatives of long chain carboxylic acids.

The term "emulsifier-free process" is herein meant a process in which the starting composition includes no or little amount, e.g. less than 0.01 wt% (with respect to the monomers and any polymers in the starting composition), of the emulsifiers mentioned in the preceding paragraph.

The addition of the modifier-free nanoclay increases the water uptake, but in the cases where the nanoclay is added without the presence of the crosslinker of the invention, the water droplets inside the WEPS beads are rather large and inhomogeneously distributed. The use of the specific crosslinker of the invention and the nanoclay in combination resulted in polymer beads with a high water uptake in which a homogeneous distribution of the nanoclay/water dispersion is achieved. The water expandable polymer beads obtained according to the invention also have good water droplet distribution throughout beads and reduced foam collapse. Improved pre-expansion was observed, as well as a decreased density and a smoother surface of the expanded polymer beads.

The addition of the nanoclay dispersion is preferably done after some portion of the monomers have been converted to copolymer. Without wishing to be bound by any theory, it is thought that the viscosity of the prepolymer mixture has to be sufficiently high prior to addition of the dispersion of nanoclay/water mixture. Water droplet coagulation and inhomogeneous droplet distribution may occur when the nanoclay dispersion is added to a low viscous reaction mixture. When the nanoclay dispersion is added, the degree of conversion from the monomers to polymer is preferably 20 to 55%, based on the monomers. The degree of conversion can be determined by evaporating the volatile monomers from a sample of the reaction mixture of a known weight and measuring the residual weight of the non-volatile polymer. The sample may be dried e.g. at 60 °C for at least 24 hours under vacuum for evaporation of entrapped water and styrene monomer. In the cases where the starting composition further comprises PS homopolymer, the weight of the polymer made from the added monomers can be determined taking into account the initially weighed amount of the PS homopolymer.

The nanoclay used in the present invention is a modifier-free nanoclay. Modifier-free nanoclays used in the present invention are not particularly limited and include modifier-free nanoclays such as sodium montmorillonite (Na⁺MMT), and calcium montmorillonite (Ca²⁺MMT), which can be synthetic or natural. Although calcium montmorillonite typically exists as aggregates formed of layered structures, the aggregates can be exfoliated in a water-based solution. It is to be appreciated that layered talc minerals may be included in addition to, or in place of, the modifier-free nanoclays, and such embodiments are considered to be within the purview of this invention. In preferred embodiments, the nanoclay is Na⁺MMT. It is commercially available from e.g. Southern Clay Products, Inc or Nanocor. The sodium montmorillonite available from Aldrich is sold under the name Nanocor PGV. Nanocor PGV has an aspect ratio of 150-200 and a maximum moisture uptake of 18 wt%. The sodium montmorillonite available from Southern Clay Products is sold under the name Nanofil116 and has a moisture content of 11 wt%.

The starting composition in the process according to the present invention preferably comprises no or little amount, e.g. less than 0.01 wt% (with respect to the monomers and any polymers in the starting composition) of a polyphenylene ether resin. This is preferable in view of the ease of recycle of WEPS beads. The PPE resin is normally a homo- or copolymer having units of the formula 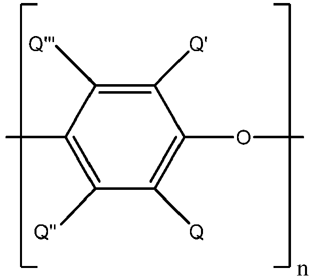 wherein Q, Q', Q", Q'" are independently selected from the group consisting of hydrogen, halogen, hydrocarbon, halohydrocarbon, hydrocarbonoxy and halohydrocarbonoxy; and n represents the total number of monomer units and is an integer of at least about 20, and more usually at least 50. Examples of the PPE resin are mentioned in WO2013/034276.

The starting composition in the process according to the present invention preferably comprises no or little amount, e.g. less than 0.01 wt% (with respect to the monomers and any polymers in the starting composition) of a comonomer copolymerisable with styrene. This is preferred in view of the ease of recycle of WEPS beads.

The starting composition may further comprise polystyrene. The weight ratio of polystyrene in the starting composition is preferably between 1-20 wt%, more prefereblay 5-15 wt% of the total weight of the monomers and any polymer in the starting composition. Any polystyrene may be used, including a non-recycled polystyrene homopolymer, a recycled polystyrene, polystyrene produced as a waste during the production of expandable polystyrene beads. Use of polystyrene produced as a waste during the production of expandable polystyrene beads is especially advantageous in that the waste can be used.

The amount of the nanoclay is preferably 0.1-15 wt% with respect to the total weight of the monomers and any polymer in the starting composition, more preferably 0.1-5 wt%, more preferably 0.1-1.0 wt%, more preferably 0.3-1.0 wt%. Even more preferably, the amount of the nanoclay is 0.5-1.0 wt%. This range of nanoclay results in a particularly improved water uptake.

### Step a)

The starting composition used in the process of the present invention is provided in step a). The starting composition comprises styrene and a cross-linking agent as described above. The starting composition may further comprise polystyrene. The starting composition may further comprise a polymerization initiator. It is noted that a combination of more than one initiators may also be used. The starting composition preferably does not contain an emulsifier, i.e. the starting composition is an emulsifier-free composition.

In order to obtain a significant cross-linking effect, the amount of the cross-linking agent should not be too low. On the other hand, if the amount of cross-linking agent would be too high, the expandability of the eventual particles would be deteriorated. A suitable range is from 0.01 to 5% wt, preferably from 0.01 to 1.5% wt, more preferably 0.1 to 1.0 wt%, based on the total weight of the monomers and any polymers in the starting composition. Most preferably from 0.3 to 0.5% wt of cross-linking agent is used, based on the total weight of the monomers and any polymers in the starting composition.

The polymerization initiator can be selected from the conventional initiators for free-radical styrene polymerization. They include in particular organic peroxy compounds, such as peroxides, peroxycarbonates and peresters. Combinations of peroxy compounds can also be used. Typical examples of the suitable peroxy initiators are C6 - C20 acyl peroxides such as decanoyl peroxide, dibenzoyl peroxide, octanoyl peroxide, stearyl peroxide, 3,5,5-trimethyl hexanoyl peroxide, peresters of C2 -C18 acids and C1 - C5 alkyl groups, such as t-butylperbenzoate, t-butylperacetate, t-butyl-perpivalate, t-butylperisobutyrate and t-butyl-peroxylaurate, and hydroperoxides and dihydrocarbyl (C3 - C10) peroxides, such as diisopropylbenzene hydroperoxide, di-t-butyl peroxide, dicumyl peroxide or combinations thereof. Most suitable initiators include dibenzoyl peroxide and tert-butylperoxybenzoate.

Radical initiators different from peroxy compounds are not excluded. A suitable example of such a compound is α,α'-azobisisobutyronitrile. The amount of radical initiator is suitably from 0.01 to 1 % wt, based on the weight of the monomers and any polymers in the starting composition.

The starting composition may further contain other additives in effective amounts. Such additives include chain transfer agents, dyes, fillers, flame retarding compounds, nucleating agents, antistatic compounds and lubricants.

### Step b)

The starting composition is subjected to a prepolymerization step to obtain a mixture of the components of the starting composition and a polymer polymerized from the monomers in the starting composition. The starting composition may be added to a reactor, e.g. a double-walled reactor equipped with motorized stirrer, reflux cooler, temperature sensor and nitrogen inlet.

The reactor may be purged with a nitrogen flow of e.g. 0.5 L/min during the whole reaction. The stirring speed is set to an appropriate speed, e.g. at 300 rpm.

The starting composition is heated to the reaction temperature to obtain a prepolymer composition. The reaction temperature is typically chosen to be in the range of 80 to 91 °C. More preferably, the reaction temperature is chosen to be in the range of 85 to 91 °C, even more preferably 89 to 91 °C. In the cases where azo type initiators are used, the reaction temperature may be chosen to be lower than 80 °C, e.g. 70-80 °C. The reaction temperature is chosen to control the reaction rate to an appropriate level. When the temperature is too low, the reaction the overall reaction rate is too low. Similarly, when the temperature is too high, the overall reaction rate becomes too high.

When the temperature reaches the reaction temperature, the reaction mixture is subsequently held at the reaction temperature for 30-120 minutes. Preferably, the reaction time is 45-90 minutes, more preferably 70-90 minutes.

Particularly preferred is heating at a temperature of 85-91 °C for 70-90 minutes, more preferably from 70-80 min.

The degree of conversion of the prepolymer composition to which the nanoclay dispersion is added is preferably 20 to 55 %, more preferably 20 to 35%, based on the monomers. The degree of conversion can be determined by evaporating the volatile monomers from a sample of the reaction mixture of a known weight and measuring the residual weight of the non-volatile polymer. The weight of the polymer made from the added monomers can be determined taking into account the initially weighed amount of any polymer already added in the starting composition. The sample may be dried e.g. at 60 °C for at least 24 hours under vacuum to remove the volatile monomer fraction.

### Step c)

The nanoclay is mixed with the prepolymer composition as an aqueous dispersion. The aqueous dispersion of the nanoclay may be obtained by a combination of high shear mixing and ultrasonification. For example, the water containing the nanoclay is subjected to a high shear mixing of 15000-20000 rpm for 30 minutes followed by ultrasonification of 750 W for 30 minutes. It will be appreciated that suitable rates and time depend on the type and the size of high shear mixer to a large degree. These steps may be performed at room temperature. These steps may be repeated until a homogeneous nanoclay/water mixtureis obtained.

Step c) results in an inverse emulsion of nanoclay/water in the prepolymer composition, i.e. droplets of a mixture of nanoclay and water are dispersed in the prepolymer composition. The inverse emulsion is kept isothermally for some time, e.g. 10-40 min at or close to the reaction temperature, e.g. at 90 °C.

### Step d)

The inverse emulsion obtained by step c) is suspended in an aqueous medium. The aqueous medium may be added to the inverse emulsion or the inverse emulsion may be added to the aqueous medium while stirring. The aqueous medium may contain a suspension stabilizer. Any conventional suspension stabilizer may be used, such as polyvinylalcohol, gelatine, polyethyleneglycol, hydroxyethylcellulose, carboxymethylcellulose, polyvinylpyrrolidone, polyacrylamide, but also salts of poly(meth)acrylic acid, phosphonic acid or (pyro)phosphoric acid, maleic acid, ethylene diamine tetracetic acid, and the like, as will be appreciated by the person skilled in the art. Suitable salts include the ammonium, alkali metal and alkaline earth metal salts. An advantageous example of such a salt is tricalcium phosphate. Preferably, the stabilizing agent is based on polyvinylalcohol. The amount of the stabilizing agents may suitably vary from 0.05 to 1.2, preferably from 0.15 to 0.8% wt, based on the weight of suspension water. The volume ratio between the aqueous medium and the prepolymer composition may vary between wide ranges, as will be appreciated by a person skilled in the art. Suitable volume ratios include 1:1 to 1:10 (prepolymer composition : aqueous suspension). The optimal ratio is determined by economic considerations.

Preferably, the aqueous medium has a temperature close to the inverse emulsion. This avoids the temperature decrease of the inverse emulsion.

### Step e)

The prepolymer mixture which is suspended in water containing suspension stabilizer as described in step d) is subjected to suspension polymerization. The temperature of this polymerization step varies with reaction time, but is typically between 90-130 °C. The temperature is preferably at least as high as the prepolymerization step b). The suspension polymerization is preferably performed for a period of 250-320 min, more preferably 270-280 min. When this step is performed at a higher pressure, the temperature may be higher. For example, at a pressure of 4 bars, the step may be performed at a temperature of up to 125-130 °C. The polymerization is preferably performed in this case for a period of up to 410 minutes, preferably for a period of 180-300 minutes, preferably from 200-280 minutes.

Steps a)-e) may be performed in the same reactor. This provides a simple process compared e.g. to the processes in which the prepolymerization step and the polymerization step are performed in different reactors. The reactor may be a glass reactor where one can look inside, or a pressurized reactor made of e.g. a stainless steel.

The expandable polymer beads may be further coated with a coating composition for reducing the tendency of the particles to agglomerate and/or suppressing the diffusion of water out of the beads. Examples of such coating compositions are compositions containing glycerol- or metal carboxylates. Such compounds reduce the tendency of the particles to agglomerate. Suitable carboxylates are glycerol mono-, di-and/or tristearate and zinc stearate. Examples for such additive composition are disclosed in GB-A-1,409,285. Particularly useful coating composition comprises wax, especially paraffin wax. The coating composition are deposited onto the particles via known methods e.g. via dry-coating in a ribbon blender or via a slurry or solution in a readily vaporizing liquid.

The present invention also relates to water expandable polymer beads obtained or obtainable by the present invention.

The water expandable polymer beads according to the present invention preferably have an average diameter of 0.1 to 3 mm, preferably from 0.4 to 1.2 mm.

The expandable particles can be pre-foamed by hot air or by using (superheated) steam, to yield expanded or pre-expanded particles. Such particles have a reduced density, e.g. from 800 to 30 kg/m³. It will be appreciated that in order to vaporize the water included in the particles to effect foaming, the temperature must be higher than used for C3 -C6 hydrocarbon foaming agents which have a lower boiling point than water. Foaming can also be effected by heating in oil, hot air or by microwaves.

Therefore, the present invention also relates to expanded polymer beads obtained or obtainable by expanding the water expandable polymer beads according to the present invention.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention is now elucidated by way of the following examples, without however being limited thereto.

### Experiments

The monomer styrene, initiators tert-butylperoxybenzoate (TBPB) and dibenzyl peroxide composition (DBPO 75%; water 25%), the cross linking agents divinylbenzene (isomer mixture), ethylene glycol dimethacrylate, polyethyleneglycol methylether and polyethylene glycol dimethacrylate, as well as the suspension stabilizer polyvinylalcohol (Mowiol® 40-88, *M_{w}* = 205 kg/mol) and the nanoclay Nanocor PGV used as water carrier were obtained from Aldrich and used as received.

Table 1 shows an overview of the composition feeds used in the experiments. All values are in weight part.

**Table 1. Overview of experiments**

| Component | Ex 1 | Ex 2 | CEx A | CEx B | CEx C | CEx D |
|---|---|---|---|---|---|---|
| Monomer: Styrene | 100 | 100 | 100 | 100 | 100 | 100 |
| Initiator: DBPO | 0.4 | 0.4 | 0.4 | 0.4 | 0.4 | 0.4 |
| Initiator: TBPB | 0.1 | 0.1 | 0.1 | 0.1 | 0.1 | 0.1 |
| Crosslinker or Me-PEG-OH: | PEG-DM | PEG-DM | | DVB | EG-DM | Me-PEG-OH |
| | 0.1 | 0.4 | 0 | 0.1 | 0.1 | 0.5 |
| nanoclay* | 0.555 | 0.555 | 0.555 | 0.555 | 0.55 | 0.55 |
| water (blowing agent)* | 0.888 | 0.888 | 0.888 | 0.888 | 0.888 | 0.888 |
| Suspension medium: water | 200 | 200 | 200 | 200 | 200 | 200 |
| Suspension stabilizer: poly(vinyl alcohol) | 0.8 | 0.8 | 0.8 | 0.8 | 0.8 | 0.8 |

| | | | | | | |
|---|---|---|---|---|---|---|
| *in aqueous suspension of nanoclay added to the prepolymer composition | | | | | | |

### Example 1 (PEG-DM 0.1 wt% 1 kg scale)

Dibenzoyl peroxide composition (5.3 g; comprising 4.0 g of DBPO), tert-butylperoxybenzoate (1.0 g) and polyethyleneglycol dimethacrylate-750 (1.0 g) were dissolved in styrene (1.0 kg) at 80 °C in a double-walled glass reactor (2.5 L) while stirring at 300 rpm. The temperature of the solution was stabilized at 90 °C and the solution was stirred at 300 rpm for 80 min. A dispersion of PGV nanoclay (5.0 g) in water (80 mL) was added while stirring at 600 rpm. A creamy inverse emulsion was obtained. After 15 min., the temperature was back at 90 °C and the prepolymer was transferred to a 6.4 L steel autoclave containing a solution of poly(vinyl alcohol) 8.0 g) in water (2.0 L) at 90 °C. Stirring (400 rpm) was started immediately and the temperature was stabilized at 90 °C. The following temperature program was employed for the suspension polymerization:

| | | | | | | | | | | | |
|---|---|---|---|---|---|---|---|---|---|---|---|
| *t* (min) | | 150 | | 60 | | 30 | | 15 | | 15 | |
| *T*(°C) | 90 | --- | 90 | → | 120 | --- | 120 | → | 130 | --- | 130 |

After cooling to room temperature, the beads were collected by filtration over a polyester sieve cloth (mesh 80 µm) and thoroughly washed with water. Excess water was removed by centrifugation of the beads in the sieve cloth. Further drying of the bead surface was effected by passing a stream of dry nitrogen gas at 30 °C over the beads for 1 hr. The beads were subsequently sieved into 4 cuts (1.7-1.18, 1.18-0.800, 0.80-0.60 and 0.60-0.40 mm) and stored in glass snap-cap vials.

### Example 2 (PEG-DM 0.4 wt% 1 kg scale)

Example 2 was performed analogously to Example 1, except for the quantity of PEG-DM, which was 4.0 g.

### Comparative experiment A (no crosslinker, 1 kg scale)

Comparative example A was performed analogously to Example 1, with omission of the cross-linker PEG-DM.

### Comparative experiment B (DVB 0.1 wt%, 1 kg scale)

Comparative example B was performed analogously to Example 1, replacing PEG-DM for DVB (1.0 g).

### Comparative experiment C (EG-DM 0.1 wt%, 1 kg scale)

Comparative example C was performed analogously to Example 1, replacing PEG-DM for EG-DM (1.0 g).

### Comparative experiment D (Me-PEG-OH 0.5 wt%, 1 kg scale)

Comparative example D was performed analogously to Example 1, replacing PEG-DM for poly(ethyleneglycol)methylether (Me-PEG-OH) with Mₙ = 2,000 g/mol (5.0 g).

### Expansion of WEPS beads:

The 1.18-0.80 mm sieve cut was used in expansion experiments. Approximately 0.5-1.0 g of beads were placed in a spherical metal wire basket (Ø 32 mm). The basket was immersed in Dow Corning DC200 silicon oil at 140 °C for 5-10 s. The basket was removed from the oil bath and immediately chilled in a bath of liquid nitrogen. Excess oil was subsequently removed by washing with pentane. This procedure was repeated until 30 mL of foamed material was obtained. The foamed beads were dried in open air and the bulk density ρ_{B} was determined gravimetrically on 30 mL of foamed beads.

### Results

Polymer properties of the WEPS beads are collected in Table 3.

**Table 3: Selected polymer properties for WEPS beads.**

| Example | Mw | PDI | *T*_{g} |
|---|---|---|---|
| Ex 1 | 267 | 3.5 | 105 |
| Ex 2 | * | * | 104 |
| Comp. Ex A | 244 | 5.9 | 105 |
| Comp. Ex B | * | * | 104 |
| Comp. Ex C | 375 | 3.9 | 104 |
| Comp. Ex D | 166 | 2.1 | 106 |

| | | | |
|---|---|---|---|
| * beads swell, but do not dissolve in THF for SEC analysis | | | |

Expansion properties of WEPS beads are collected in Table 4.

**Table 4: Water content of unfoamed and bulk densities of expanded WEPS beads.**

| Example | [H₂O] | ρ_{B} |
|---|---|---|
| Ex 1 | 6.4 | 92 |
| Ex 2 | 7.1 | 77 |
| Comp. Ex A | 4.0 | 271 |
| Comp. Ex B | 5.1 | 254 |
| Comp. Ex C | 7.0 | 395 |
| Comp. Ex D | 4.4 | 263 |

Water contents was determined by Karl-Fischer titration using a Metrohm 831 KF Coulometer in combination with a Metrohm Thermoprep 832 oven at 160 °C. Glass transition temperatures (*T*_{g}) were measured on a Thermal Analysis DSC Q1000. Prior to DSC measurements, the entrapped water was removed from the beads by drying in a vacuum oven for 24 hrs. The temperature was varied between 25 and 140 °C employing heating and cooling rates of 10 °C/min. Only the second run was used for evaluation so as to erase any thermal history. SEM micrographs were obtained using a Philips XL30 ESEM-FEG or a JEOL JSM-5600 SEM apparatus. Sliced beads were sputtered with gold.

Overall, the beads prepared using PEG-DM as a cross-linker incorporate more water than those prepared with DVB as cross-linker or those prepared without cross-linker. The beads prepared using EG-DM as a cross-linker incorporate the same level of water as those prepared with PEG-DM.

### Morphology of WEPS beads before and after foaming

The morphology of unexpanded and expanded WEPS beads was studied by scanning electron microscopy (SEM).

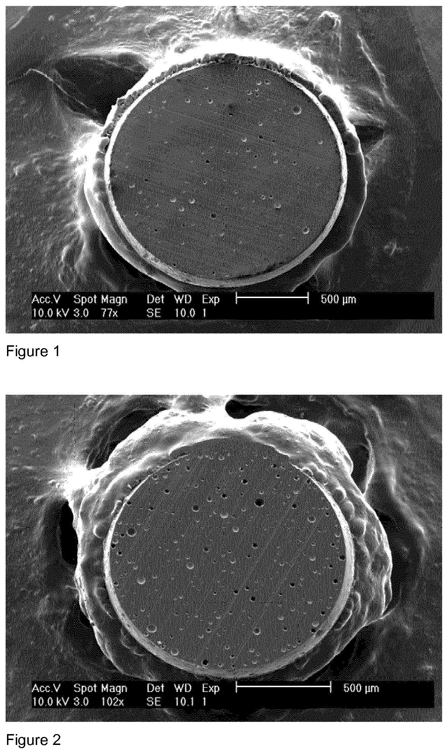

Cross-sections of unfoamed WEPS beads are shown in Figures 1-6 In all cases, holes can be observed on the surface of the cross-section. These holes result from water droplets entrapped in the polymer matrix which leave holes upon evaporation of the water during cross-sectioning. For good expansion it is beneficial to have many droplets with small diameters (d), evenly distributed throughout the bead.
Figure 1 shows a SEM micrograph of a WEPS bead prepared according to example 1 of the present invention (0.1 wt% PEG-DM). The SEM micrograph shows holes with d < 65 µm.
Figure 2 shows a SEM micrograph of a WEPS bead prepared according to example 2 of the present invention (0.4 wt% PEG-DM). The SEM micrograph shows a more dense distribution of holes compared to Example 1 and holes with d < 55 µm.
Figure 3 shows a SEM micrograph of a WEPS bead prepared according to Comp. Ex. A (no cross-linker). Several large holes can be observed (d < 510 µm), located relatively closely together.
Figure 4 shows a SEM micrograph of a WEPS bead prepared according to Comp. Ex. B (0.1 wt% DVB). A number of relatively large holes can be observed (d < 510 µm), randomly distributed over the cross-section.
Figure 5 shows a SEM micrograph of a WEPS bead prepared according to Comp. Ex. C (0.1 wt% EG-DM). A number of relatively large holes can be observed (d < 220 µm), randomly distributed over the cross-section.
Figure 6 shows a SEM micrograph of a WEPS bead prepared according to Comp. Ex. D (0.5 wt% Me-PEG-OH). A number of relatively large holes can be observed (d < 260 µm), randomly distributed over the cross-section.
   Overall, the beads prepared using PEG-DM as a cross-linker show a better water distribution than beads prepared with DVB, EG-DM or Me-PEG-OH or without cross-linker. It can be seen that the distribution of the water droplets in the beads is correlated with the bulk densities of the expanded beads. Those beads that show in the SEM micrographs small holes, evenly distributed over the surface (Ex 1 and Ex 2) show good expansion (Table 4, ρ_{B} < 100 kg/m³), while beads showing large holes in the SEM micrographs, unevenly distributed over the surface (Comparative experiments), result in poor expansion (Table 4, ρ_{B} > 200 kg/m³)
   Cross-sections of expanded beads are shown in Figures 7-12.

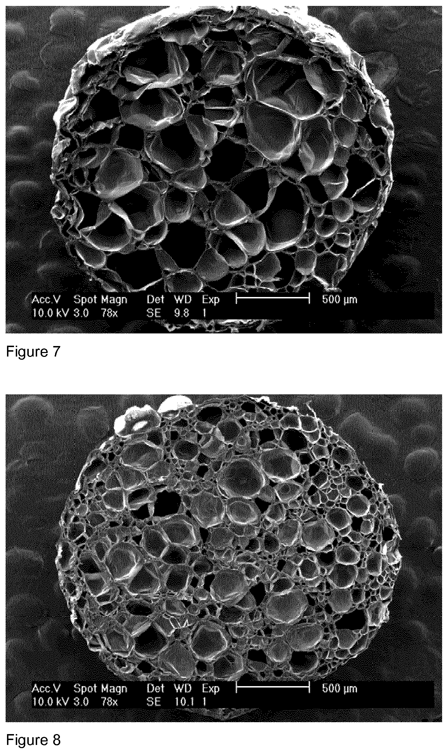

Figure 7 shows a SEM micrograph of a WEPS bead, prepared according to example 1 and foamed as described above. A spherical bead is obtained exhibiting rather large cells.
Figure 8 shows a SEM micrograph of a WEPS bead, prepared according to example 2 and foamed as described above. A spherical bead is obtained exhibiting both small and large cells.

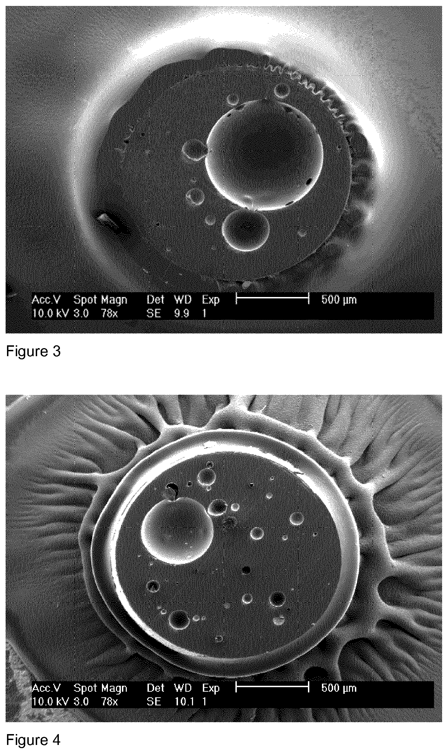

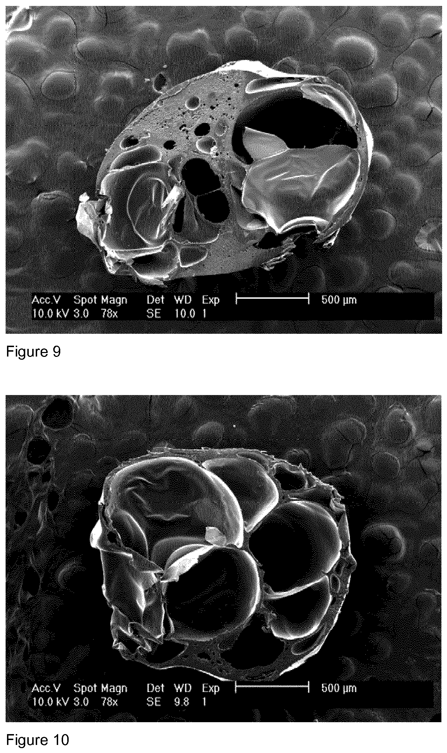

Figure 9 shows a SEM micrograph of a WEPS bead, prepared according to Comp. Ex. A and foamed as described above. A non-spherical bead is obtained exhibiting only a few foamed cells. Foam collapse is evident by the presence of blowholes. The low melt strenght in the absence of a cross-linker, combined with the poor water distribution observed in the unexpanded beads prepared according to this experiment (Figure 3) result in poor foamability.
Figure 10 shows a SEM micrograph of a WEPS bead, prepared according to Comp. Ex. B and foamed as described above. A non-spherical bead is obtained exhibiting several large foamed cells. Foam collapse is evident from the presence of blowholes. The poor water distribution observed in the unexpanded beads prepared according to this experiment (Figure 4) results in poor foam-ability.

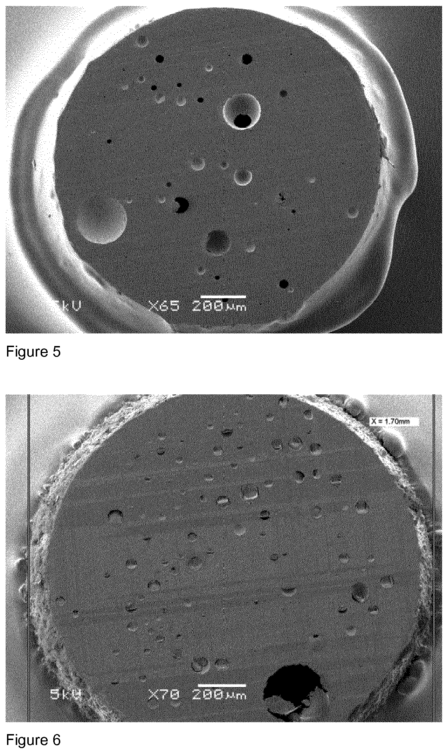

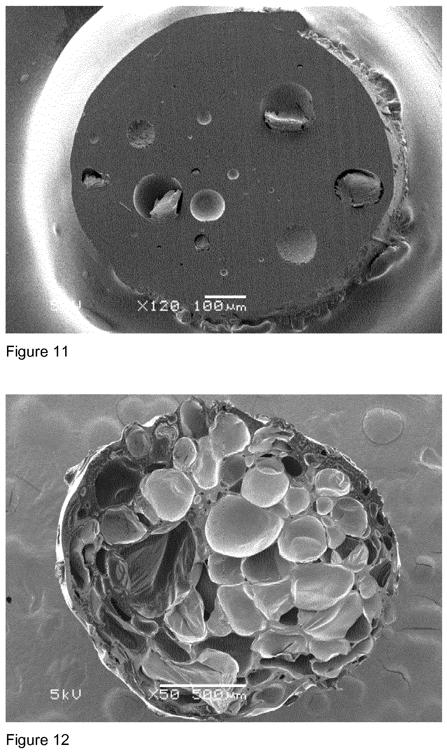

Figure 11 shows a SEM micrograph of a WEPS bead, prepared according to Comp. Ex. C and subjected to the foaming procedure as described above. A spherical bead is obtained showing virtually no expansion. The poor water distribution observed in the unexpanded beads prepared according to this experiment (Figure 5) results in poor foamability
Figure 12 shows a SEM micrograph of a WEPS bead, prepared according to example Comp. Ex. D and foamed as described above. A non-spherical bead is obtained exhibiting several large foamed cells. Foam collapse is evident from the presence of blowholes.

Overall, the foam morphology of these beads is better than that of beads prepared according to comparative examples A, B and C. This is consistent with the better water distribution in the unexpanded bead, evident from Figure 6. While the addition of Me-PEG-OH has led to better water distribution, its inability to from cross-links makes that there is no positive contribution to the melt strength of the polymer during expansion, which results in foam collapse.

## Claims

1. A process for the preparation of water expandable polymer beads, which process comprises the steps of:
a) providing a starting composition comprising styrene and a cross-linking agent containing a hydrophilic polymer chain and at least two hydrolysable end-groups having a carbon-to-carbon double bond,
b) prepolymerizing the starting composition to obtain a prepolymer composition,
c) adding an aqueous dispersion of a modifier-free nanoclay to the prepolymer composition to obtain an inverse emulsion,
d) suspending the inverse emulsion obtained by step c) in an aqueous medium to yield an aqueous suspension of suspended droplets and
e) polymerizing the monomers in the droplets of the suspension obtained by step d) to obtain the water expandable polymer beads.

2. The process according to claim 1, wherein the cross-linking agent has a molecular weight Mn of at least 300.

3. The process according to any one of the previous claims, wherein the hydrophilic polymer chain of the cross-linking agent is chosen from the group consisting of polyethers such as polyalkylene glycol, poly(meth)acrylates such as homo and copolymers of acrylic and methacrylic acid, polyamides, polyacrylamides such as polyvinylamides, polyesters, poly(lactams) such as polyvinylpyrrolidone (PVP), polyurethanes, polyvinyl chlorides, polyvinylethers, polyepoxides, polyoxazolidones, polyvinyl alcohols, polyethylene imines, polyethyleneoxides, maleic anhydride based copolymers, polypeptides, polysaccharides such as cellulose and starch, poly(carboxylic acids), polyanhydrides, polyols, polyphosphazenes and alkyd copolymers.

4. The process according to any one of the previous claims, wherein the end groups of the cross-linking agent is represented by general formula -X-CR¹=CR²R³, wherein
X is selected from ether group, carboxyl group and amide group and
R¹, R² and R³ each independently stands for H or an alkyl having 1 to 3 C-atoms.

5. The process according to any one of the previous claims, wherein the cross-linking agent is selected from the group consisting of polyethylene glycol diacrylate and polyethylene glycol dimethacrylate.

6. The process according to any one of the previous claims,, wherein the amount of the cross-linking agent in the starting composition is 0.01 to 5% wt, preferably from 0.01 to 1.5% wt, more preferably 0.01 to 0.5 wt%, based on the amount of the monomers and any polymer in the starting composition.

7. The process according to any one of the previous claims, wherein the modifier-free nanoclay is an unmodified sodium montmorillonite nanoclay.

8. The process according to any one of the previous claims, wherein the amount of the nanoclay is 0.1-10 wt%, preferably 0.1-5 wt%, more preferably 0.1-1.0 wt%, more preferably 0.3-1.0 wt%, even more preferably 0.5-1.0 wt% of the total weight of the monomers and any polymer in the starting composition.

9. The process according to any one of the previous claims, wherein step b) involves heating the starting composition at a temperature of 85-91°C for a period of 30-120 minutes, preferably for 70-90 minutes.

10. The process according to any one of the previous claims, wherein step e) involves heating the suspension obtained by step d) at a temperature of 90-135 °C for a period of 180-300 minutes, preferably from 200-280 minutes.

11. The water expandable polymer beads obtainable or obtained by the process according to claims 1-10.

12. Expanded polymer beads obtainable or obtained by expanding the water expandable polymer beads according to claim 11.

13. Use of polyethylene glycol diacrylate or polyethylene glycol dimethacrylate as a cross-linking agent in the process for making water expandable polymer beads comprising polystyrene and a nanoclay which are substantially free from polyphenylene ether resin.

## Patentansprüche

1. Verfahren zur Herstellung von wasserexpandierbaren Polymerperlen, bei dem man:
a) eine Ausgangszusammensetzung, die Styrol und ein Vernetzungsmittel mit einer hydrophilen Polymerkette und mindestens zwei hydrolysierbaren Endgruppen mit einer Kohlenstoff-Kohlenstoff-Doppelbindung bereitstellt,
b) die Ausgangszusammensetzung prepolymerisiert, wobei man eine Prepolymer-Zusammensetzung erhält,
c) eine wässrige Dispersion eines modifikatorfreien Nanotons zu der Prepolymer-Zusammensetzung gibt, wobei man eine inverse Emulsion erhält,
d) die durch Schritt c) erhaltene inverse Emulsion in einem wässrigen Medium dispergiert, wobei man eine wässrige Suspension von suspendierten Tröpfchen erhält, und
e) die Monomere in den Tröpfchen der durch Schritt d) erhaltenen Suspension polymerisiert, wobei man die wasserexpandierbaren Polymerperlen erhält.

2. Verfahren nach Anspruch 1, bei dem das Vernetzungsmittel ein Molekulargewicht Mn von mindestens 300 aufweist.

3. Verfahren nach einem der vorhergehenden Ansprüche, bei dem die hydrophile Polymerkette des Vernetzungsmittels aus der Gruppe bestehend aus Polyethern wie Polyalkylenglykol, Poly(meth)-acrylaten wie Homo- und Copolymeren von Acryl- und Methacrylsäure, Polyamiden, Polyacrylamiden wie Polyvinylamiden, Polyestern, Poly(lactamen) wie Polyvinylpyrrolidon (PVP), Polyurethanen, Polyvinylchloriden, Polyvinylethern, Polyepoxiden, Polyoxazolidonen, Polyvinylalkohlen, Polyethyleniminen, Polyethylenoxiden, auf Maleinsäureanhydrid basierenden Copolymeren, Polypeptiden, Polysacchariden wie Cellulose und Stärke, Poly(carbonsäuren), Polyanhydriden, Polyolen, Polyphosphazenen und Alkyd-Copolymeren ausgewählt ist.

4. Verfahren nach einem der vorhergehenden Ansprüche, bei dem die Endgruppen des Vernetzungsmittels durch die allgemeine Formel -X-CR¹=CR²R³ wiedergegeben werden, wobei
X aus einer Ethergruppe, einer Carboxylgruppe und einer Amidgruppe ausgewählt ist und
R¹, R² und R³ jeweils unabhängig voneinander für H oder ein Alkyl mit 1 bis 3 C-Atomen stehen.

5. Verfahren nach einem der vorhergehenden Ansprüche, bei dem das Vernetzungsmittel aus der Gruppe bestehend aus Polyethylenglykoldiacrylat und Polyethylenglykoldimethacrylat ausgewählt ist.

6. Verfahren nach einem der vorhergehenden Ansprüche, bei dem die Menge des Vernetzungsmittels in der Ausgangszusammensetzung 0,01 bis 5 Gew.-%, vorzugsweise 0,01 bis 1,5 Gew.-%, weiter bevorzugt 0,01 bis 0,5 Gew.-%, bezogen auf die Menge der Monomere und jeglichen Polymers in der Ausgangszusammensetzung, beträgt.

7. Verfahren nach einem der vorhergehenden Ansprüche, bei dem es sich bei dem modifikatorfreien Nanoton um einen unmodifizierten Natriummontmorillonit-Nanoton handelt.

8. Verfahren nach einem der vorhergehenden Ansprüche, bei dem die Menge des Nanoton 0,1-10 Gew.-%, vorzugsweise 0,1-5 Gew.-%, weiter bevorzugt 0,1-1,0 Gew.-%, weiter bevorzugt 0,3-1,0 Gew.-%, noch weiter bevorzugt 0,5-1,0 Gew.-%, bezogen auf die Menge der Monomere und jeglichen Polymers in der Ausgangszusammensetzung, beträgt.

9. Verfahren nach einem der vorhergehenden Ansprüche, bei dem man in Schritt b) die Ausgangszusammensetzung über einen Zeitraum von 30-120 Minuten, vorzugsweise 70-90 Minuten, auf eine Temperatur von 85-91 °C erhitzt.

10. Verfahren nach einem der vorhergehenden Ansprüche, bei dem man in Schritt e) die durch Schritt b) erhaltene Suspension über einen Zeitraum von 180-300 Minuten, vorzugsweise 200-280 Minuten, auf eine Temperatur von 90-135 °C erhitzt.

11. Wasserexpandierbare Polymerperlen, erhältlich oder erhalten durch das Verfahren nach den Ansprüchen 1-10.

12. Expandierte Polymerperlen, erhältlich oder erhalten durch Expandieren der wasserexpandierbaren Polymerperlen nach Anspruch 11.

13. Verwendung von Polyethylenglykoldiacrylat oder Polyethylenglykoldimethacrylat als Vernetzungsmittel bei dem Verfahren zur Herstellung von Polystyrol und einen Nanoton umfassenden wasserexpandierbaren Polymerperlen, die weitgehend frei von Polyphenylenetherharz sind.

## Revendications

1. Procédé de préparation de billes de polymère gonflant sous l'effet de l'eau, ledit procédé comprenant les étapes qui consistent à :
a) fournir une composition de départ comprenant un styrène et un agent de réticulation contenant une chaîne polymère hydrophile et au moins deux groupes terminaux hydrolysables comportant une double liaison carbone-carbone,
b) prépolymériser la composition de départ pour obtenir une composition de prépolymère,
c) ajouter une dispersion aqueuse d'une nanoargile sans modificateur à la composition de prépolymère pour obtenir une émulsion inverse,
d) mettre en suspension l'émulsion inverse obtenue à l'étape c) dans un milieu aqueux pour produire une suspension aqueuse de gouttelettes en suspension et
e) polymériser les monomères dans les gouttelettes de la suspension obtenue à l'étape d) pour obtenir les billes de polymère gonflant sous l'effet de l'eau.

2. Procédé selon la revendication 1, dans lequel l'agent de réticulation a une masse moléculaire Mn d'au moins 300.

3. Procédé selon l'une quelconque des revendications précédentes, dans lequel la chaîne polymère hydrophile de l'agent de réticulation est sélectionnée dans le groupe constitué de polyéthers tels que le polyalkylène glycol, de poly(méth)acrylates tels que les homopolymères et copolymères de l'acide acrylique et de l'acide méthacrylique, de polyamides, de polyacrylamides tels que les polyvinylamides, de polyesters, de poly(lactames) tels que la polyvinylpyrrolidone (PVP), de polyuréthanes, de polychlorures de vinyle, de polyvinyléthers, de polyépoxydes, de polyoxazolidones, d'alcools polyvinyliques, de polyéthylèneinines, d'oxydes de polyéthylène, de copolymères à base d'anhydride maléique, de polypeptides, de polysaccharides tels que la cellulose et l'amidon, de poly(acides carboxyliques), de polyanhydrides, de polyols, de polyphosphazènes et de copolymères d'alkydes.

4. Procédé selon l'une quelconque des revendications précédentes, dans lequel les groupes terminaux de l'agent de réticulation sont représentés par la formule générale -X-CR¹=CR²R³, dans laquelle
X est sélectionné parmi un groupe éther, un groupe carboxyle et un groupe amide et
R¹, R² et R³ représentent chacun indépendamment un atome d'hydrogène ou un groupe alkyle comportant 1 à 3 atomes de carbone.

5. Procédé selon l'une quelconque des revendications précédentes, dans lequel l'agent de réticulation est sélectionné dans le groupe constitué du diacrylate de polyéthylène glycol et du diméthacrylate de polyéthylène glycol.

6. Procédé selon l'une quelconque des revendications précédentes, dans lequel la quantité de l'agent de réticulation dans la composition de départ est de 0,01 à 5 % en poids, préférablement de 0,01 à 1,5 % en poids, plus préférablement de 0,01 à 0,5 % en poids, relativement à la quantité des monomères et de tout polymère pouvant être présent dans la composition de départ.

7. Procédé selon l'une quelconque des revendications précédentes, dans lequel la nanoargile sans modificateur est une nanoargile de type montmorillonite sodique non modifiée.

8. Procédé selon l'une quelconque des revendications précédentes, dans lequel la quantité de la nanoargile est de 0,1 à 10 % en poids, préférablement de 0,1 à 5 % en poids, préférablement de 0,1 à 1,0 % en poids, plus préférablement de 0,3 à 1,0 % en poids, encore plus préférablement de 0,5 à 1,0 % en poids du poids total des monomères et de tout polymère pouvant être présent dans la composition de départ.

9. Procédé selon l'une quelconque des revendications précédentes, dans lequel l'étape b) comprend un chauffage de la composition de départ à une température de 85 à 91 °C pendant une période de 30 à 120 minutes, préférablement pendant 70 à 90 minutes.

10. Procédé selon l'une quelconque des revendications précédentes, dans lequel l'étape e) comprend un chauffage de la suspension obtenue à l'étape d) à une température de 90 à 135 °C pendant une période de 180 à 300 minutes, préférablement pendant 200 à 280 minutes.

11. Billes de polymère gonflant sous l'effet de l'eau pouvant être obtenues ou obtenues par le procédé selon les revendications 1 à 10.

12. Billes de polymère expansé pouvant être obtenues ou obtenues par expansion des billes de polymère gonflant sous l'effet de l'eau selon la revendication 11.

13. Utilisation de diacrylate de polyéthylène glycol ou de diméthacrylate de polyéthylène glycol comme agent de réticulation dans le procédé de fabrication de billes de polymère gonflant sous l'effet de l'eau comprenant un polystyrène et une nanoargile qui sont sensiblement exempts de résine de polyphénylène éther.
